# EUROPÄISCHE PATENTSCHRIFT

(11) **EP 2 087 963 B1**
(45) Veröffentlichungstag und Bekanntmachung des Hinweises auf die Patenterteilung: **10.09.2014**
(21) Anmeldenummer: 08022225.0
(22) Anmeldetag: 20.12.2008
(51) Int. Cl.: B23K 20/12, B23K 33/00, B23K 20/227, B23K 103/22

(54) **Reibschweißverfahren**
Friction welding method
Procédé de soudage par friction

(30) Priorität: 05.02.2008 DE 102008007541
(43) Veröffentlichungstag der Anmeldung: 12.08.2009
(73) Patentinhaber: ThyssenKrupp Marine Systems GmbH, 24143 Kiel (DE)
(72) Erfinder: Köppe, Dietrich, Dipl.-Ing., 24256 Fargau-Pratjau (DE); Claas, Waterstraat, 38464 Volkmarsdorf (DE)
(74) Vertreter: Vollmann, Heiko

(56) Entgegenhaltungen:
- EP-A2- 1 231 011
- WO-A1-2006/061203
- DE-A1- 19 519 576
- JP-A- 2004 138 209
- US-A- 6 035 501

## Beschreibung

Die Erfindung betrifft ein Reibschweißverfahren mit den im Oberbegriff des Anspruchs 1 angegebenen Merkmalen.

Beim Reibschweißen werden zwei Fügeteile, von denen zumindest ein Fügeteil typischerweise rotationssymmetrisch ist, flächig aneinander gepresst und relativ zueinander gedreht, wobei die Berührungs- bzw. Reibflächen der beiden Fügeteile durch die dann auftretende Reibungswärme erwärmt werden. Die Drehbewegung wird so lange aufrechterhalten bis mindestens eines der Fügeteile teilweise plastifiziert. Dann wird die Drehbewegung beendet und der Anpressdruck so lange gehalten, bis sich die beiden Fügeteile stoffschlüssig verbunden haben.

Ein solches Reibschweißverfahren geht beispielsweise aus DE 198 02 393 A1 hervor. Hier wird die Verschweißung eines bolzenartigen Bauteils mit einem Blech beschrieben, wobei dieses Bauteil in einer an dem Blech ausgebildeten Ausnehmung eingreift. Um das Bauteil mit dem Blech verschweißen zu können, weist das Bauteil außenseitig eines zum Eingriff in die Ausnehmung des Blechs vorgesehenen Teils eine absatzförmig ausgebildete radiale Erweiterung auf, deren Querschnitt größer als der Querschnitt der Ausnehmung des Blechs ist. An dieser Erweiterung ist eine ringförmige Anschweißfläche ausgebildet, die beim Reibschweißen plastifiziert wird, wodurch sich an der Außenseite des Blechs und beabstandet von der Ausnehmung ein Stoffschluss zwischen dem Bauteil und dem Blech ergibt.

Als besondere Vorteile des Reibschweißens gegenüber anderen Schweißverfahren, wie z.B. den Schmelzschweißverfahren, gelten u. a. die hohe Reproduzierbarkeit der Schweißergebnisse, die große Anzahl miteinander verschweißbarer Werkstoffe, die geringe Wärmebeeinflussung der Fügeteile sowie die sehr kurzen Schweißzeiten. Dem steht allerdings nachteilig gegenüber, dass der Anwendungsbereich für das Reibschweißen sehr begrenzt ist, da Fügeteile nur an den einander kontaktierenden und relativ zueinander rotierenden Reibflächen miteinander verschweißt werden können. Insofern ist das Reibschweißen zum Verbinden von Fügeteilen, die auch außerhalb eines rotationssymmetrischen Kontaktbereichs miteinander verschweißt werden sollen, nicht geeignet.

DE 195 19 576 A1 beschreibt einen Achskörper, bei dem ein rohrförmiges Teil in einer Buchse mittels Reibschweißens befestigt wird. Das rohrförmige Teil ist so dimensioniert, dass bei seinem Eingriff in die Buchse zwischen der Buchse und dem rohrförmigen Teil ein Ringspalt ausgebildet ist. An dem rohrförmigen Teil ist ein radial nach außen gerichteter Kragen ausgebildet, der zur Anlage an dem Außenrand der Buchse vorgesehen ist. Dieser Kragen ist so weit von dem in die Buchse eingreifenden Ende des rohrförmigen Teils beabstandet, dass der Kragen dann an dem Außenrand der Buchse anliegt, wenn gleichzeitig die Stirnfläche des in die Buchse eingreifenden Endes des rohrförmigen Teils an einer an dem Boden der Buchse ausgebildeten Anlageschulter aufliegt. Auf diese Weise wird eine zweischnittige Schweißverbindung zwischen dem rohrförmigen Teil und der Buchse möglich, nämlich einerseits zwischen dem Kragen des rohrförmigen Teils und dem Außenrand der Buchse und andererseits zwischen der Stirnfläche des in die Buchse greifenden Endes des rohrförmigen Teils und der an dem Boden der Buchse ausgebildeten Anlageschulter. Um zu verhindern, dass der sich an den beiden Schweißstellen ergebende Schweißwulst zu groß wird, können die Kontaktflächen zwischen dem rohrförmigen Teil und der Buchse abgeschrägt ausgebildet sein.

AT 004337 U1 ist eine weitere Variante des Reibschweißens zu entnehmen. Hier wird das Verschweißen zweier flach aneinanderliegender Teile beschrieben, wobei ein erstes der zu verschweißenden Bauteile eine durch dieses Bauteil führende Bohrung aufweist, die einen Kanal zu dem zweiten zu verschweißenden Bauteil bildet. Durch die Bohrung ist ein stiftförmiges Teil geführt, das mit dem zweiten Bauteil reibverschweißt wird, wobei das stiftförmige Teil derart plastifiziert wird, dass der sich bildende Schweißwulst nicht nur eine Verbindung zwischen den stiftförmigen Teil und dem zweiten Bauteil erzeugt, sondern wegen der radialen Ausdehnung der Schweißwulst in der Bohrung des ersten Bauteils auch eine Verbindung zwischen dem stiftförmigen Teil und dem ersten Bauteil schafft. Bei dem stiftförmigen Teil handelt es sich also nicht um ein Funktionsbauteil, sondern dieses Teil bildet den Zusatzwerkstoff zum Verschweißen des ersten mit dem zweiten Bauteil.

EP 1 231 01 A2 ist ein Verfahren zur Verbindung eines Ventileinsatzes aus einer Eisenlegierung mit einem Zylinderkopf aus einer Aluminiumlegierung durch Anschweißen zu entnehmen. Die Öffnung des Zylinderkopfs, in die der Ventilsitzeinlass eingeschweißt werden soll, ist nach außen hin absatzförmig erweitert. Die umfängliche Außenseite des Ventilsitzeinsatzes ist so gestaltet, dass sie eine schräg zum Absatz der Zylinderkopföffnung ausgebildete Reibfläche aufweist und in einem Teilbereich mit der Zylinderkopföffnung einen Ringspalt mit einer Hinterschneidung des Ventilsitzeinsatzes bildet. In den Ringspalt auch geschmolzenes Material des Zylinderkopfs hineinfließen, sodass er teilweise aufgefüllt wird.

In WO 2006/061203 Al ist ein Reibschweißverfahren zum Verbinden eines Blechteils mit einem Rotationskörper beschrieben. Hierbei ist an dem Blechteil eine Ausbuchtung oder ein Durchzug ausgebildet, dessen Innen- und/oder Außenfläche eine oder zwei Reibflächen in dem in die Ausbuchtung oder dem Durchzug eingesetzten Rotationskörper bilden.

Vor diesem Hintergrund liegt der Erfindung die Aufgabe zugrunde, ein Reibschweißverfahren zu schaffen, mit dem der Anwendungsbereich des Reibschweißens erheblich erweitert wird.

Gelöst wird diese Aufgabe durch ein Reibschweißverfahren mit den in Anspruch 1 angegebenen Merkmalen, wobei sich bevorzugte Ausführungsformen aus den Unteransprüchen, der nachfolgenden Beschreibung und der Zeichnung ergeben.

Das erfindungsgemäße Reibschweißverfahren dient zum Verbinden eines mit einer Ausnehmung versehenen ersten Bauteils mit einem in die Ausnehmung unter Bildung eines Ringspalts eingreifenden zweiten Bauteils. Hierbei werden zumindest zwei Reibflächen der beiden Bauteile unter relativer Drehung gegeneinander gepresst. Gemäß der Erfindung werden die Reibflächen der beiden Bauteile jeweils an den Ringspalt anschließend und schräg zur Anpressrichtung ausgebildet und so lange aneinander gerieben, bis auch der daran angrenzende Ringspalt im Wesentlichen vollständig verschweißt ist.

Grundidee der Erfindung ist es, die Reibflächen derart an den beiden Bauteilen anzuordnen, dass sie an den Ringspalt zwischen erstem und zweitem Bauteil anschließen, d. h., dass sie an diesem Ringspalt angrenzen bzw. diesen Ringspalt begrenzen, wobei sie so abgeschrägt werden, dass ein Teil des durch Reibung in einen viskosen bzw. teigigen Zustand plastifizierten Werkstoffs, der von einem oder beiden Bauteilen stammen kann, durch die Anpresskraft in den Ringspalt gedrückt wird und dort nach Beendigung der relativen Drehbewegung zwischen erstem und zweitem Bauteil diese beiden Bauteile in dem Ringspalt miteinander stoffschlüssig verbindet.

Vorteilhaft ermöglicht das erfindungsgemäße Reibschweißverfahren auf diese Weise nicht nur eine Verbindung der beiden Bauteile in einer normal zur Anpresskraft ausgerichteten Ebene, sondern auch in dem Ringspalt eine stoffschlüssige, sich über den gesamten Umfang erstreckende umfängliche Verbindung von erstem und zweitem Bauteil. So können auch komplexere Schweißaufgaben, für die bislang andere Schweißverfahren herangezogen werden mussten, mit dem erfindungsgemäßen Reibschweißverfahren gelöst werden, wobei sich die oben genannten Vorteile des Reibschweißens gegenüber den bislang verwendeten Schweißverfahren ergeben.

Sowohl die Ausnehmung des ersten Bauteils als auch das zweite Bauteil sind bei dem erfindungsgemäßen Reibverfahren typischerweise rotationssymmetrisch auszubilden. Bevorzugt ist der mit dem zweiten Bauteil den Ringspalt bildende Abschnitt der Ausnehmung im Wesentlichen hohlzylindrisch ausgebildet und der damit korrespondierende Abschnitt des zweiten Bauteils im Wesentlichen zylindrisch ausgebildet. Darüber hinaus können die den Ringspalt bildenden Abschnitte der beiden Bauteile beispielsweise auch konisch ausgebildet sein oder der entsprechende Abschnitt der Ausnehmung kann konkav und der hiermit korrespondierende Abschnitt des zweiten Bauteils konvex gewölbt ausgebildet sein.

Die zumindest eine Reibfläche des ersten Bauteils wird bevorzugt an einem Rand der Ausnehmung gebildet. Hierbei ist die Reibfläche derart abgeschrägt, dass sie eine trichterförmige Erweiterung oder Verengung der Ausnehmung bildet, die sich in Anpressrichtung des zweiten Bauteils gegen das erste Bauteil bis auf den Querschnitt des Abschnitts der Ausnehmung verjüngt, in dem die Ausnehmung zusammen mit dem in die Ausnehmung eingreifenden zweiten Bauteil den Ringspalt bildet. Vorteilhaft bildet die so abgeschrägte Reibfläche des ersten Bauteils eine Führung, über die plastifizierter Werkstoff des zweiten Bauteils von der Anpresskraft in den Ringspalt geschoben werden kann.

Um bei dieser Ausgestaltung der Reibfläche des ersten Bauteils mit dieser Reibfläche in einen reibenden Kontakt treten zu können, wird die zumindest eine Reibfläche des zweiten Bauteils vorteilhafterweise an einer den Rand der Ausnehmung des ersten Bauteils überdeckenden flanschartigen Erweiterung ausgebildet. Dementsprechend schließt sich bei dem zweiten Bauteil an dem in die Ausnehmung eingreifenden Bereich ein zweiter Bereich an, dessen Querschnitt so gewählt ist, dass dieser Abschnitt den Rand der Ausnehmung und eine dort ausgebildete Reibfläche des ersten Bauteils überdeckt und so einen Reibpartner mit der Reibfläche des ersten Bauteils bildet. Hierbei ist die an dieser flanschartigen Erweiterung ausgebildete Reibfläche zweckmäßigerweise korrespondierend zu der an dem ersten Bauteil ausgebildeten Reibfläche abgeschrägt.

Weiter vorteilhaft wird bei dem erfindungsgemäßen Reibschweißverfahren eine Reibfläche in der Ausnehmung ausgebildet. D. h., in der Ausnehmung wird ein vorzugsweise schräg ausgebildeter Absatz eingearbeitet, an dem sich der Querschnitt der Ausnehmung in Anpressrichtung verjüngt. Mit der von diesem Absatz gebildeten Reibfläche wird typischerweise ein in die Ausnehmung eingreifender Teil des zweiten Bauteils in Kontakt gebracht, an dem ebenfalls eine Reibfläche auszubilden ist.

Bevorzugt ist die in der Ausnehmung auszubildende Reibfläche im Bereich des Endes der Ausnehmung vorgesehen, das von der Öffnung der Ausnehmung, an der das zweite Bauteil eingeführt wird, beabstandet ist. In diesem Fall wird die Reibfläche des zweiten Bauteils zweckmäßigerweise an dem in die Ausnehmung des ersten Bauteils eingreifenden Ende ausgebildet. Weiter bevorzugt sind die in der Ausnehmung des ersten Bauteils auszubildende und die an dem Ende des zweiten Bauteils auszubildende Reibfläche korrespondierend schräg zur Anpressrichtung auszugestalten. Dies ermöglicht es, dass der durch Reibung plastifizierte Werkstoff durch die auf das zweite Bauteil ausgeübte Anpresskraft in den dort angrenzenden Ringspalt gedrückt wird.

Gemäß der Erfindung werden sowohl an dem ersten als auch an dem zweiten Bauteil jeweils zwei Reibflächen ausgebildet, die in Anpressrichtung derart voneinander beabstandet sind, dass jeweils eine Reibfläche des zweiten Bauteils an einer Reibfläche des ersten Bauteils zur Anlage bringbar ist. Hierbei kann sowohl die Ausnehmung des ersten Bauteils als auch der in dieser Ausnehmung eingreifende Abschnitt des zweiten Bauteils derart abgestuft ausgebildet sein, dass sich zwei oder mehr Ringspalte zwischen erstem und zweitem Bauteil ergeben, wobei an den an diese Ringspalte anschließenden Reibflächenpaarungen Werkstoff plastifiziert und durch die Anpresskraft in diese Ringspalte gedrückt wird. Vorteilhaft werden allerdings sowohl an dem ersten als auch an dem zweiten Bauteil zwei Reibflächen ausgebildet, die an denselben Ringspalt anschließen. Hierbei wird der Ringspalt von den in der Ausnehmung des ersten Bauteils angeordneten Reibflächen in Anpressrichtung begrenzt.

Eine weitere vorteilhafte Verfahrensweiterbildung sieht vor, dass in der Ausnehmung des ersten Bauteils zumindest eine sich quer zu einer Mittelachse der Ausnehmung erstreckende Hinterschneidung ausgebildet wird. Hierbei kann an der Ausnehmung eine sich in Umfangsrichtung erstreckende Nut ausgebildet werden, die zweckmäßigerweise in einem an einer Reibflächenpaarung von erstem und zweitem Bauteil angrenzenden Bereich angeordnet ist, so dass dort plastifizierter Werkstoff über den Ringspalt in die Nut gedrückt werden kann und so das erste und das zweite Bauteil in gewisser Weise auch formschlüssig miteinander verbindet. Bevorzugt erstreckt sich die in der Ausnehmung des ersten Bauteils ausgebildete Hinterschneidung über den gesamten Umfang der Ausnehmung.

Als Werkstoff für das zweite Bauteil wird vorzugsweise ein Werkstoff mit einer gegenüber dem Werkstoff des ersten Bauteils geringeren Warmfestigkeit gewählt. Dies ermöglicht es, dass während des Reibvorgangs lediglich der Werkstoff des zweiten, in die Ausnehmung des ersten Bauteils eingreifenden Bauteils plastifiziert wird und in den Ringspalt zwischen erstem und zweitem Bauteil gedrückt wird, wo er dann auch eine Schweißverbindung zwischen erstem und zweitem Bauteil schafft. In diesem Zusammenhang hat sich gezeigt, dass besonders vorteilhafte Schweißergebnisse dann erzielt werden, wenn, wie es bevorzugt vorgesehen ist, als Werkstoff für das erste Bauteil Stahl und als Werkstoff für das zweite Bauteil eine Kupfer-Nickel-Legierung gewählt wird. Besonders vorteilhaft können mit dem erfindungsgemäßen Reibschweißverfahren Bauteile aus niedriglegierten wasservergüteten Feinkornbaustählen oder austenitischen Stählen mit einem Bauteil aus einer Kupfer-Nickel-Legierung verschweißt werden.

Eine bevorzugte Anwendung des erfindungsgemäßen Reibschweißverfahrens stellt das formschlüssige Fügen eines Bolzens in eine Druckkörperdurchführung eines Unterseebootes dar. Hier ist das Reibschweißverfahren gemäß der Erfindung insbesondere für das Ausbuchsen solcher Druckkörperdurchführungen vorgesehen, durch die später Seewasser geleitet werden soll. Wegen der guten Seewasserbeständigkeit von Kupfer-Nickel-Legierungen werden die entsprechenden Durchbrechungen der aus dem korrisionsbeständigen niedriglegierten wasservergüteten Feinkornbaustahl HY 80 hergestellten Druckkörper mit Bauteilen aus der Kupfer-Nickel-Legierung CuNi10Fe ausgebuchst.

Bislang ist es üblich gewesen, diese Bauteile mit Schmelzschweißverfahren in die Durchbrechungen des Unterseeboots stoffschlüssig einzufügen, wobei sich die aufwändige Nahtvorbereitung und die große Rissneigung der entstehenden Mischverbindungen als besonders nachteilig erwiesen hat. Demgegenüber werden die Schweißzeiten bei Einsatz des erfindungsgemäßen Reibschweißverfahrens für diese Schweißaufgabe deutlich verringert, wobei Risse im Bereich der Schweißverbindung nahezu ausgeschlossen werden können.

Nachfolgend wird die Erfindung anhand eines in der Zeichnung dargestellten Ausführungsbeispiels näher erläutert. Darin zeigen jeweils in einem schematischen Längsschnitt:

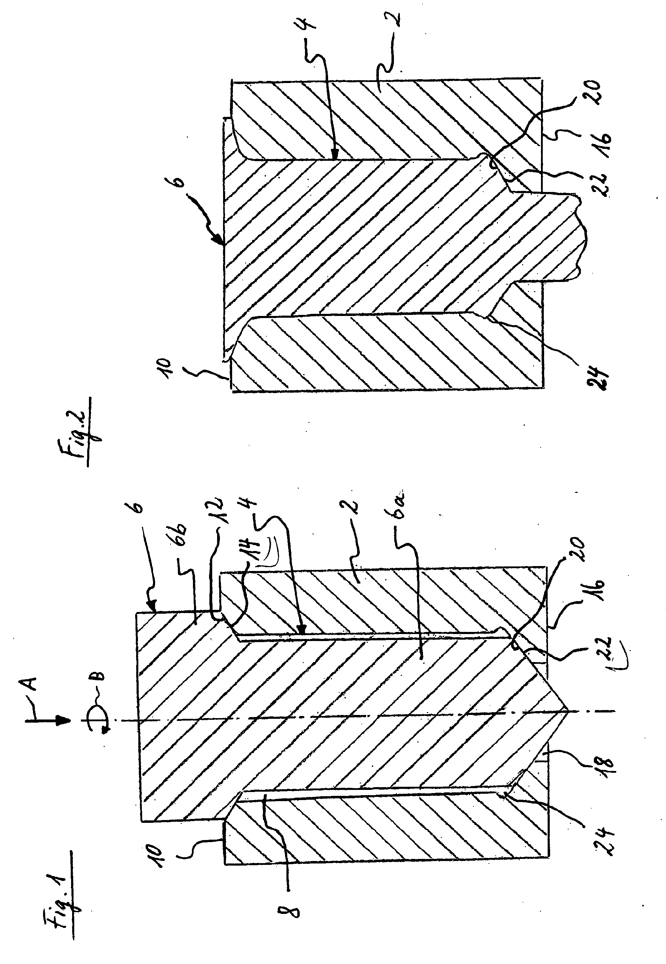

- Fig. 1: ein erstes und ein zweites damit zu verschweißendes Bauteil vor dem Reibschweißen und
- Fig. 2: die Bauteile nach Fig. 1 nach dem Reibschweißen.

Ein erstes Bauteil 2 weist eine sich vollständig durch das Bauteil 2 erstreckende rotationssymmetrische Ausnehmung 4 auf. In diese Ausnehmung 4 soll ein bolzenförmiges zweites Bauteil 6 stoffschlüssig gefügt werden. Hierzu weist das zweite Bauteil 6 einen zylindrischen Bereich 6a auf, der zum Eingriff in die Ausnehmung 4 des ersten Bauteils 2 vorgesehen ist. Der Querschnitt des Bauteils 6 ist in diesem Bereich 6a so dimensioniert ist, dass dieser Bereich 6a beim Eingriff in die Ausnehmung 4 einen Ringspalt 8 mit der Ausnehmung 4 bildet. An dem Bereich 6a des zweiten Bauteils 6 schließt sich ein zylindrischer Bereich 6b an, der eine flanschförmige Erweiterung des Bauteils 6 bildet.

An einer Stirnseite 10 des ersten Bauteils 2 wird ein Rand der Ausnehmung 4 in einer Richtung schräg zu einer Anpressrichtung A, in der das zweite Bautel 6 während des eigentlichen Reibschweißvorgangs gegen das erste Bauteil 2 angepresst wird, ausgebildet. Korrespondierend zu der Schräge des Randes der Ausnehmung 4 des Bauteils 2 wird auch der Absatz zwischen dem Bereich 6a und dem Bereich 6b des zweiten Bauteils 6 abgeschrägt ausgebildet. Der abgeschrägte Randbereich der Ausnehmung 4 bildet eine erste Reibfläche 12 des ersten Bauteils 2, während der abgeschrägte Absatz an dem zweiten Bauteil 6 eine erste Reibfläche 14 des zweiten Bauteils 6 bildet.

Im Bereich einer von der Stirnseite 10 abgewandten in den Figuren unteren Stirnseite 16 weist die Ausnehmung 4 eine Verjüngung auf, in der sich der Querschnitt der Ausnehmung 4 in Anpressrichtung A konisch verringert. Entsprechend konisch wird auch das in den Figuren untere Ende des Bereichs 6a des zweiten Bauteils 6 ausgebildet. Der sich konisch verjüngende Bereich der Ausnehmung 4 bildet eine zweite Reibfläche 20 des ersten Bauteils 2, an der eine von dem konischen Ende des Bereichs 6a des zweiten Bauteils 6 gebildete Reibfläche 22 zur Anlage gebracht wird. Weiterhin ist in Anpressrichtung A des zweiten Bauteils 6 an das erste Bauteil 2, direkt vor der konischen Verjüngung der Ausnehmung 4 in die Wandung der Ausnehmung 4 eine Hinterschneidung in Form einer sich über den gesamten Umfang der Ausnehmung 4 erstreckenden Nut 24 vorgesehen.

Zum stoffschlüssigen Fügen von erstem Bauteil 2 und zweitem Bauteil 6 wird der Bereich 6a des zweiten Bauteils 6 in die Ausnehmung 4 des ersten Bauteils eingeführt. Hierbei bilden die Reibfläche 12 des ersten Bauteils 2 und die Reibfläche 14 des zweiten Bauteils eine erste Reibflächenpaarung und davon in Anpressrichtung A des zweiten Bauteils 6 beabstandet die Reibfläche 20 des ersten Bauteils 2 und die Reibfläche 22 des zweiten Bauteils 6 gleichzeitig eine zweite Reibflächenpaarung.

Unter einem Anpressdruck wird das zweite Bauteil 6 relativ zu dem ersten Bauteil 2 in einer Drehrichtung B in Rotation versetzt. Hierbei wird der Werkstoff des zweiten Bauteils 6, der gegenüber dem Werkstoff des ersten Bauteils 2 eine geringere Warmfestigkeit aufweist, sowohl im Bereich seiner ersten Reibfläche 12 als auch im Bereich seiner zweiten Reibfläche 22 durch die entstehende Reibungswärme plastifiziert. Der auf dem zweiten Bauteil 6 lastende Anpressdruck drückt dann den viskosen, teigförmig plastifizierten Werkstoff des zweiten Bauteils 6 entlang der Reibfläche 12 des ersten Bauteils 2 zu dem Ringspalt 8 und von dort in Anpressrichtung A in den Ringspalt 8, während der an der Reibfläche 22 des Bauteils 6 plastifizierte Werkstoff entlang der Reibfläche 20 zu dem Ringspalt 8 gedrückt wird und von dort entgegen der Anpressrichtung A in dem Ringspalt verschoben wird, bis der Ringspalt 8 einschließlich der an den Ringspalt 8 anschließenden Nut 24 mit Werkstoff des zweiten Bauteils 6 vollständig gefüllt ist. In dem Ringspalt 8 verbindet dieser plastifizierte Werkstoff dann stoffschlüssig die Umfangsfläche des Bereichs 6a des zweiten Bauteils 6 mit dem Innenumfang der Ausnehmung 4 des ersten Bauteils 2, wobei der in die Nut 24 geflossene Werkstoff die Bauteile 2 und 6 zusätzlich formschlüssig festlegt, so dass die Bauteile 2 und 6 auch unabhängig von der Schweißverbindung stets miteinander verbunden bleiben.

### Bezugszeichenliste

- 2: Bauteil
- 4: Ausnehmung
- 6: Bauteil
- 6a, 6b: Bereich
- 8: Ringspalt
- 10: Stirnseite oben
- 12: Reibfläche
- 14: Reibfläche
- 16: Stirnseite unten
- 18: Öffnung
- 20: Reibfläche
- 22: Reibfläche
- 24: Nut

- A: Anpressrichtung
- B: Drehrichtung

## Patentansprüche

1. Reibschweißverfahren zum Verbinden eines mit einer Ausnehmung (4) versehenen ersten Bauteils (2) mit einem in die Ausnehmung (4) unter Bildung eines Ringspalts: (8) eingreifenden zweiten Bauteils (6), bei dem zumindest zwei Reibflächen (12, 14, 20, 22) der beiden Bauteile (2, 6) unter relativer Drehung gegeneinander gepresst werden, wobei die Reibflächen (12, 14, 20, 22) der beiden Bauteile (2, 6) jeweils an den Ringspalt (8) anschließend ausgebildet werden und die Reibflächen (12, 14, 20, 22) solange aneinander gerieben werden, bis auch der daran angrenzende Ringspalt (8) im Wesentlichen vollständig verschweist ist, **dadurch gekennzeichnet, dass** die Reibflächen (12, 14, 20, 22) der beiden Bauteile (2, 6) jeweils schräg zur Anpressrichtung (A) ausgebildet werden, dass sowohl an dem ersten (2) als auch an dem zweiten Bauteil (6) zwei Reibffächen (12, 14, 20, 22) ausgebildet werden, die in Anpressrichturig (A) derart voneinander beabstanden sind, dass jeweils eine Reibfläche (14, 22) des zweiten Bauteils (6) an einer Reibfläche (12. 20) des ersten Bauteils (2) zur Anlage bringbar ist.

2. Reibschweißverfahren nach Anspruch 1, **dadurch gekennzeichnet, dass**, die Reibfläche (12) des ersten Bauteils (2) an einem Rand der Ausnehmung (4) ausgebildet wird.

3. Reibschweißverfahren nach Anspruch 2, **dadurch gekennzeichnet, dass** die Reibfläche (14) des zweiten Bauteils (6) an einer den Rand der Ausnehmung (4) überdeckenden flanschartigen Erweiterung ausgebildet wird.

4. Reibschweißverfahren nach einem der vorangehenden Ansprüche, **dadurch gekennzeichnet, dass** eine Reibfläche (20) des esten Bauteils (2) in der Ausnehmung (4) ausgebildet wird.

5. Reibschweißverfahren nach einem der vorangehenden Ansprüche, **dadurch gekennzeichnet, dass** eine Reibfläche (22) des zweiten Bauteils (6) an einem in die Ausnehmung (4) des ersten Bauteils (2), eingreifenden Ende ausgebildet wird,

6. Reibverfahren nach einem der vorangehenden Ansprüche, **dadurch gekennzeichnet dass** die Reibflächen (12, 14, 20, 22) an denselben Ringspatt (8) anschließen.

7. Reibschweißverfahren nach einem der vorangehenden Ansprüche, **dadurch gekennzeichnet, dass** in der Ausnehmung (4) des ersten Bauteils (2) zumindest eine sich quer zu einer Mittelachse der Ausnehmung (4) erstreckende Hinterschneidung ausgebildet wird.

8. Reibschweißverfahren nach einem der vorangehenden Ansprüche, **dadurch gekennzeichnet, dass** als Werkstoff für das zweite Bauteil (6) ein Werkstoff mit einer gegenüber dem Werkstoff des ersten Bauteils (2) geringeren Warmfestigkeit gewählt wird.

9. Reibschweißverfahren nach einem der vorangehenden Ansprüche, **dadurch gekennzeichnet, dass** als Wertstoff für das erste Bauteil (2) Stahl und als Werkstoff für das zweite Bauteil (6) eine Kupfer-Nickel-Legierung, gewählt wird.

10. Anwendung des Reibschweißverfahrens nach einem der Ansprüche 1 bis 9 für das formschlüssige Fügen eines Bolzens in eine Druckkörperdurchführung eines Unterseeboots.

## Claims

1. A friction welding method for connecting a first component (2) provided with a recess (4) to a second component (6) which engages into the recess (4) amid the formation of an annular gap (8), with which at least two friction surfaces (12, 14, 20, 22) of the two components (2, 6) are pressed against one another amid relative rotation, wherein the friction surfaces (12, 14, 20, 22) of the two components (2, 6) are in each case formed connecting to the annular gap (8), and the friction surfaces (12, 14, 20, 22) are rubbed on one another for so long until the annular gap (8) which is adjacent thereon is also essentially completely welded, **characterised in that** the friction surfaces (12, 14, 20, 22) of the two components (2, 6) are each formed obliquely to the pressing direction (A), that two friction surfaces (12, 14, 20, 22) are formed on the first (2) as well as on the second component (6) and are distanced to one another in the pressing direction (A) in a manner such that in each case a friction surface (14, 22) of the second component (6) can be brought to bear on a friction surface (12, 20) of the first component (2).

2. A friction welding method according to claim 1, **characterised in that** the friction surface (12) of the first component (2) is formed on an edge of the recess (4).

3. A friction welding method according to claim 2, **characterised in that** the friction surface (14) of the second component (6) is formed on a flange-like widening which covers the edge of the recess (4).

4. A friction welding method according to one of the preceding claims, **characterised in that** a friction surface (20) of the first component (2) is formed in the recess (4).

5. A friction welding method according to one of the preceding claims, **characterised in that** a friction surface (22) of the second component (6) is formed on an end which engages into the recess (4) of the first component (2).

6. A friction welding method according to one of the preceding claims, **characterised in that** the friction surfaces (12, 14, 20, 22) connect to the same annular gap (8).

7. A friction welding method according to one of the preceding claims, **characterised in that** at least one undercut extending transversely to a middle axis of the recess (4) is formed in the recess (4) of the first component (2).

8. A friction welding method according to one of the preceding claims, **characterised in that** a material with a lower heat resistance compared to the material of the first component (2) is selected as a material for the second component (6).

9. A friction welding method according to one of the preceding claims, **characterised in that** steel is selected as a material for the first component (2) and a copper-nickel alloy is selected as a material for the second component (6).

10. The application of the friction welding method according to one of the claims 1 to 9 for the positive-fit joining of a bolt into a pressure hull feed-through of a submarine.

## Revendications

1. Procédé de soudage par friction servant à assembler un premier élément (2) muni d'un évidement (4) à un second élément (6) qui s'engage dans l'évidement (4) en formant une fente annulaire (8), dans lequel au moins deux surfaces de frottement (12, 14, 20, 22) des deux éléments (2, 6) sont comprimées l'une contre l'autre avec une rotation relative, dans lequel les surfaces de frottement (12, 14, 20, 22) des deux éléments (2, 6) font respectivement suite à la fente annulaire (8), et les surfaces de frottement (12, 14, 20, 22) sont frottées l'une contre l'autre jusqu'à ce que la fente annulaire (8) qui en est limitrophe soit sensiblement entièrement fermée par soudage, **caractérisé en ce que** les surfaces de frottement (12, 14, 20, 22) des deux éléments (2, 6) sont respectivement obliques par rapport à la direction de la compression (A), **en ce qu'**aussi bien sur le premier élément (2) que sur le second élément (6) sont formées deux surfaces de frottement (12, 14, 20, 22) qui sont espacées l'une de l'autre dans la direction de la compression (A) de telle manière qu'une respectivement des surfaces de frottement (14, 22) du second élément (6) puisse être mise en contact avec une surface de frottement (12, 20) du premier élément (2).

2. Procédé de soudage par friction selon la revendication 1, **caractérisé en ce que** la surface de frottement (12) du premier élément (2) est formée sur un bord de l'évidement (4).

3. Procédé de soudage par friction selon la revendication 2, **caractérisé en ce que** la surface de frottement (14) du second élément (6) est formée sur un élargissement en forme de collerette qui recouvre le bord de l'évidement (4).

4. Procédé de soudage par friction selon l'une des revendications précédentes, **caractérisé en ce qu'**une surface de frottement (20) du premier élément (2) est formée dans l'évidement (4).

5. Procédé de soudage par friction selon l'une des revendications précédentes, **caractérisé en ce qu'**une surface de frottement (22) du second élément (6) est formée sur une extrémité qui s'engage dans l'évidement (4) du premier élément (2).

6. Procédé de soudage par friction selon l'une des revendications précédentes, **caractérisé en ce que** les surfaces de frottement (12, 14, 20, 22) font suite à la même fente annulaire (8).

7. Procédé de soudage par friction selon l'une des revendications précédentes, **caractérisé en ce que** dans l'évidement (4) du premier élément (2) est formée au moins une contre-dépouille s'étendant transversalement à l'axe central de l'évidement (4).

8. Procédé de soudage par friction selon l'une des revendications précédentes, **caractérisé en ce qu'**on choisit comme matière pour le second élément (6) une matière ayant une plus faible résistance à la chaleur que la matière du premier élément (2).

9. Procédé de soudage par friction selon l'une des revendications précédentes, **caractérisé en ce qu'**on choisit l'acier comme matière pour le premier élément (2) et un alliage de cuivre-nickel comme matière pour le second élément (6).

10. Utilisation du procédé de soudage par friction selon l'une des revendications 1 à 9 pour l'assemblage par coopération de formes d'un boulon dans un perçage de la coque pressurisée d'un sous-marin.
